# EUROPEAN PATENT APPLICATION

(11) **EP 4 560 960 A1**
(43) Date of publication of application: **28.05.2025**
(21) Application number: 23851285.9
(22) Date of filing: 08.05.2023
(51) Int. Cl.: H04L 5/00

(54) **COMMUNICATION METHOD AND APPARATUS**

(30) Priority: 09.08.2022 CN 202210948679
(71) Applicant: Huawei Technologies Co., Ltd., Shenzhen, Guangdong 518129 (CN)
(72) Inventor: GUO, Yinghao, Shenzhen, Guangdong 518129 (CN)
(74) Representative: Goddar, Heinz J.
(86) International application number: PCT/CN2023/092827
(87) International publication number: WO 2024/032055

(57) **Abstract**

A communication method and apparatus are provided, to resolve a problem of a waste of resources in the conventional technology. In this application, the method includes: UE receives pre-configuration information. The UE stops, when a preset condition is met, requesting an uplink resource, where the uplink resource is used to send first information. When the first information is an activation request, the first information is used to activate the pre-configuration information. When the first information is a deactivation request, the first information is used to deactivate the pre-configuration information.

## Description

### CROSS-REFERENCE TO RELATED APPLICATIONS

This application claims priority to Chinese Patent Application No. 202210948679.1, filed with the China National Intellectual Property Administration on August 9, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A next generation radio access network (next generation radio access network, NG-RAN) usually sends pre-configuration information to user equipment (user equipment, UE). When the UE needs to use the pre-configuration information to perform a corresponding function, the UE needs to first send an activation request to the NG-RAN. After obtaining an activation indication from the NG-RAN, the UE activates the pre-configuration information based on the activation indication. The activation request is carried in a medium access control control element (medium access control control element, MAC CE).

In a process in which the UE sends the MAC CE to the NG-RAN, the UE determines whether a physical uplink shared channel (physical uplink shared channel, PUSCH) resource used to send the MAC CE currently exists. If the PUSCH resource used to send the MAC CE does not exist, the UE triggers a scheduling request (scheduling request, SR) to request the PUSCH resource. Before obtaining the requested PUSCH resource, the UE cannot cancel the SR, that is, the SR remains in a pending (pending) state. In this case, a problem of a waste of resources exists.

### SUMMARY

This application provides a communication method and apparatus, to resolve a problem of a waste of resources.

According to a first aspect, this application provides a communication method. The method may be performed by a communication apparatus. The communication apparatus may be a terminal device (namely, UE), or a module, for example, a chip, in the terminal device.

The method includes: The UE receives pre-configuration information. The UE stops, when a preset condition is met, requesting an uplink resource, where the uplink resource is used to send first information, and when the first information is an activation request, the first information is used to activate the pre-configuration information; or when the first information is a deactivation request, the first information is used to deactivate the pre-configuration information.

In the foregoing technical solution, when determining that the preset condition is met, the UE may stop requesting the uplink resource, that is, the UE does not need to continuously request the uplink resource until the requested uplink resource is obtained. In this way, resources occupied in a process in which the UE requests the uplink resource are reduced. This helps resolve a problem of a waste of resources.

In a possible implementation, the pre-configuration information is configuration information of a pre-configured measurement gap (measurement gap, MG) for positioning. In this way, the UE may request to activate the configuration information of the pre-configured MG for positioning, so that the UE may perform positioning measurement based on the activated configuration information of the MG for positioning.

In a possible implementation, the UE triggers an SR when a PUSCH resource used to send the first information does not exist, where the SR is used to request the PUSCH resource. In a possible implementation, the UE triggers a random access channel (random access channel, RACH) when a physical uplink control channel (physical uplink control channel, PUCCH) resource used to send the SR does not exist, where the RACH is used to request the uplink resource (or referred to as an uplink grant resource). In this way, the UE triggers the SR and the RACH in sequence, to request the PUSCH resource used to send the first information (that is, the activation request or the deactivation request).

In a possible implementation, that the UE stops, when the preset condition is met, requesting the uplink resource includes: When the preset condition is met, the UE cancels the first information, and stops requesting the uplink resource, where
when the first information is the activation request, the preset condition includes one or more of the following: measurement is to be stopped; new pre-configuration information is received; other pre-configuration information is activated, where the other pre-configuration information meets a measurement requirement; second information is received, where the second information is used to modify the pre-configuration information; and the pre-configuration information has already been activated, where the measurement includes at least one or more of positioning measurement and radio resource management (radio resource management, RRM) measurement; and/or
when the first information is the deactivation request, the preset condition includes one or more of the following: second information is received, where the second information is used to modify the pre-configuration information; and the pre-configuration information has already been deactivated.

In a possible implementation, the UE includes a radio resource control (radio resource control, RRC) layer and a medium access control (medium access control, MAC) layer.

When the first information is the activation request, the preset condition includes one or more of the following: the RRC layer indicates the MAC layer to stop measurement; the RRC layer receives new pre-configuration information, and sends the new pre-configuration information to the MAC layer; the MAC layer activates other pre-configuration information; the RRC layer receives the second information, and the RRC layer sends a cancellation indication to the MAC layer, where the cancellation indication is used to cancel the activation request; and the MAC layer has already activated the pre-configuration information; and/or
when the first information is the deactivation request, the preset condition includes one or more of the following: the RRC layer receives the second information, and the RRC layer sends a cancellation indication to the MAC layer, where the cancellation indication is used to cancel the deactivation request; and the MAC layer has already deactivated the pre-configuration information.

In the foregoing technical solution, a preset condition for the UE to cancel the first information (that is, the activation request or the deactivation request) is provided. When the preset condition is met, the UE may cancel the first information. In this way, the UE does not need to send the first information, that is, does not need to send the SR triggered by the first information, and no longer needs to send the RACH triggered by the SR. This helps reduce a waste of resources.

In a possible implementation, that the UE stops, when the preset condition is met, requesting the uplink resource includes: The UE cancels, when the preset condition is met, the SR triggered by the first information, where the SR is used to request the PUSCH resource, and the PUSCH resource is used to send the first information.

When the first information is the activation request, the preset condition includes one or more of the following: the activation request has already been sent; the activation request is canceled; measurement is to be stopped, where the measurement includes at least one or more of positioning measurement and RRM measurement; second information is received, where the second information is used to modify the pre-configuration information; the pre-configuration information has already been activated; and new pre-configuration information is received; and/or
when the first information is the deactivation request, the preset condition includes one or more of the following: the deactivation request has already been sent; second information is received, where the second information is used to modify the pre-configuration information; the deactivation request is canceled; and the pre-configuration information has already been deactivated.

In a possible implementation, the UE includes an RRC layer and a MAC layer.

When the first information is the activation request, the preset condition includes one or more of the following: the MAC layer has already sent the activation request; the MAC layer cancels the activation request; the RRC layer indicates the MAC layer to stop measurement; the RRC layer receives the second information, and the RRC layer sends a cancellation indication to the MAC layer, where the cancellation indication is used to cancel the activation request; the MAC layer has already activated the pre-configuration information; and the RRC layer receives new pre-configuration information, and sends the new pre-configuration information to the MAC layer; and/or
when the first information is the deactivation request, the preset condition includes one or more of the following: the MAC layer has already sent the deactivation request; the RRC layer receives the second information, and the RRC layer sends a cancellation indication to the MAC layer, where the cancellation indication is used to cancel the deactivation request; the MAC layer cancels the deactivation request; and the MAC layer has already deactivated the pre-configuration information.

In the foregoing technical solution, a preset condition for the UE to cancel the SR is provided. When the preset condition is met, the UE may cancel the SR. This helps reduce a waste of resources.

In a possible implementation, that the UE has already sent the activation request includes: after performing packet assembly of the activation request, the UE determines that the UE has already sent the activation request; and/or that the UE has already sent the deactivation request includes: after performing packet assembly of the deactivation request, the UE determines that the UE has already sent the deactivation request. In the foregoing technical solution, a determining condition for the UE to determine that the first information (that is, the activation request or the deactivation request) is successfully sent is provided. When determining that the determining condition is met, the UE determines that the first information has already been successfully sent, and further determines that the UE can cancel the SR.

In a possible implementation, that the UE stops, when the preset condition is met, requesting the uplink resource includes: The UE cancels, when the preset condition is met, the RACH triggered by the SR, where the RACH is used to request the uplink resource.

When the first information is the activation request, the preset condition includes one or more of the following: the activation request is canceled; the SR triggered by the activation request is canceled; measurement is to be stopped, where the measurement includes at least one or more of positioning measurement and RRM measurement; second information is received, where the second information is used to modify the pre-configuration information; the pre-configuration information has already been activated; and new pre-configuration information is received; and/or when the first information is the deactivation request, the preset condition includes one or more of the following: second information is received, where the second information is used to modify the pre-configuration information; the deactivation request is canceled; the SR triggered by the deactivation request is canceled; and the pre-configuration information has already been deactivated.

In a possible implementation, the UE includes an RRC layer and a MAC layer.

When the first information is the activation request, the preset condition includes one or more of the following: the MAC layer cancels the activation request; the MAC layer cancels the SR triggered by the activation request; the RRC layer indicates the MAC layer to stop measurement; the RRC layer receives the second information and sends a cancellation indication to the MAC layer, where the cancellation indication is used to cancel the activation request; the MAC layer has already activated the pre-configuration information; and the RRC layer receives new pre-configuration information, and sends the new pre-configuration information to the MAC layer; and/or
when the first information is the deactivation request, the preset condition includes one or more of the following: the RRC layer receives the second information, and the RRC layer sends a cancellation indication to the MAC layer, where the cancellation indication is used to cancel the deactivation request; the MAC layer cancels the deactivation request; the MAC layer cancels the SR triggered by the deactivation request; and the MAC layer has already deactivated the pre-configuration information.

In the foregoing technical solution, a preset condition for the UE to cancel the RACH is provided. When the preset condition is met, the UE may cancel the RACH. This helps reduce a waste of resources.

In a possible implementation, the first information is a MAC CE.

According to a second aspect, an embodiment of this application provides a communication apparatus. The apparatus has functions of implementing the UE in the first aspect or any one of the possible implementations of the first aspect. The apparatus may be the UE, or may be a chip included in the UE.

The functions of the foregoing communication apparatus may be implemented by hardware, or may be implemented by hardware executing corresponding software. The hardware or the software includes one or more modules, units, or means (means) corresponding to the foregoing functions.

In a possible implementation, a structure of the apparatus includes a processing module and a transceiver module. The processing module is configured to support the apparatus in performing a corresponding function of the UE in the first aspect or any one of the implementations of the first aspect. The transceiver module is configured to support communication between the apparatus and another communication device. For example, when the apparatus is the UE, the apparatus may receive pre-configuration information. The communication apparatus may further include a storage module. The storage module is coupled to the processing module, and stores program instructions and data that are necessary for the apparatus. In an example, the processing module may be a processor, the communication module may be a transceiver, and the storage module may be a memory. The memory may be integrated with the processor, or may be disposed separately from the processor.

In another possible implementation, the structure of the apparatus includes a processor, and may further include a memory. The processor is coupled to the memory, and may be configured to execute computer program instructions stored in the memory, so that the apparatus performs the method in the first aspect or any one of the possible implementations of the first aspect. Optionally, the apparatus further includes a communication interface, and the processor is coupled to the communication interface. When the apparatus is a network device or the UE, the communication interface may be a transceiver or an input/output interface. When the apparatus is a chip included in the network device or a chip included in the UE, the communication interface may be an input/output interface of the chip. Optionally, the transceiver may be a transceiver circuit, and the input/output interface may be an input/output circuit.

According to a third aspect, an embodiment of this application provides a chip system, including a processor. The processor is coupled to a memory, and the memory is configured to store a program or instructions. When the program or the instructions are executed by the processor, the chip system is enabled to implement the method in the first aspect or any one of the possible implementations of the first aspect.

Optionally, the chip system further includes an interface circuit, and the interface circuit is configured to exchange code instructions to the processor.

Optionally, there may be one or more processors in the chip system, and the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may be one or more memories in the chip system. The memory may be integrated with the processor, or may be disposed separately from the processor. For example, the memory may be a non-transitory processor, for example, a read-only memory ROM. The memory and the processor may be integrated on a same chip, or may be arranged on different chips respectively.

According to a fourth aspect, an embodiment of this application provides a computer-readable storage medium, storing a computer program or instructions. When the computer program or the instructions are executed, a computer is enabled to perform the method in the first aspect or any one of the possible implementations of the first aspect.

According to a fifth aspect, an embodiment of this application provides a computer program product. When a computer reads and executes the computer program product, the computer is enabled to perform the method in the first aspect or any one of the possible implementations of the first aspect.

For technical effects that can be achieved in any one of the second aspect to the fifth aspect, refer to descriptions of beneficial effects in the first aspect. Details are not described herein again.

### BRIEF DESCRIPTION OF DRAWINGS

FIG. 1 is a diagram of an architecture of a communication system according to this application;
FIG. 2 is a schematic flowchart of pre-configuration and activation of a positioning MG according to this application;
FIG. 3 is a diagram of a format of a MAC CE according to this application;
FIG. 4 is a schematic flowchart of a communication method according to this application;
FIG. 5 is a diagram of canceling a MAC CE according to this application;
FIG. 6 is a diagram of canceling an SR according to this application;
FIG. 7 is a diagram of canceling a RACH according to this application;
FIG. 8 is a diagram of a structure of a communication apparatus according to this application; and
FIG. 9 is a diagram of a structure of another communication apparatus according to this application.

### DESCRIPTION OF EMBODIMENTS

Before this application is described, some terms or technologies in embodiments of this application are first briefly explained and described, to facilitate understanding of a person skilled in the art.

### I. User equipment (user equipment, UE)

A terminal may also be referred to as user equipment (user equipment, UE), a mobile station, a mobile terminal, a terminal device, or the like. The terminal may be widely used in various scenarios, for example, device-to-device (device-to-device, D2D) communication, vehicle-to-everything (vehicle-to-everything, V2X) communication, machine-type communications (machine-type communications, MTC), an internet of things (internet of things, IOT), virtual reality, augmented reality, industrial control, self-driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal are not limited in embodiments of this application.

### II. Core network

The core network includes a network device that processes and forwards signaling and data of a user, for example, an access management device, a session management device, a user plane gateway, and a location management device.

The user plane gateway may be a server that has functions such as mobility management, routing, and forwarding specific to user plane data. The user plane gateway, for example, a serving gateway (serving gateway, SGW), a packet data network gateway (packet data network gateway, PGW), or a user plane function (user plane function, UPF) entity, is generally located on a network side.

The access management device is mainly responsible for admission, and the access management device is, for example, an access management function (access management function, AMF) device.

The session management device is mainly responsible for session management, and the session management device is, for example, a session management function (session management function, SMF).

The location management device has a positioning function, and is mainly responsible for supporting different types of UE-related location services, including positioning the UE, transferring assistance data to the UE, and the like. For example, the location management device includes a location management function (location management function, LMF) or a location management component (location management component, LMC), or may be a local location management function (local location management function, LLMF) in the network device. For ease of description, the following embodiments are described by using an example in which the location management device is the LMF.

### III. Next generation radio access network (next generation radio access network, NG-RAN)

The NG-RAN may include a next generation evolved NodeB (next generation evolved NodeB, ng-eNB) and a next generation NodeB (next generation NodeB, gNB).

The ng-eNB is specifically an apparatus that is deployed in a radio access network and that meets a 4G standard and that provides a wireless communication function for UE. For example, the eNB may include a macro base station, a micro base station (also referred to as a small cell), a relay station, an access point, a wearable device, and a vehicle-mounted device in various forms. The eNB may alternatively be a transmission reception point (transmission reception point, TRP).

The gNB is specifically an apparatus that is deployed in a radio access network and that meets a 5G standard and that provides a wireless communication function for the UE. For example, the gNB may include a macro base station, a micro base station (also referred to as a small cell), a relay station, an access point, a wearable device, and a vehicle-mounted device in various forms. The gNB may alternatively be a transmission reception point (transmission reception point, TRP), or a transmission measurement function (transmission measurement function, TMF). The gNB may include a central unit (central unit, CU) and a distributed unit (distributed unit, DU) that are integrated into the gNB.

### IV. Scheduling request (scheduling request)

In a new radio (new radio, NR) technology, when determining that a trigger condition of a medium access control (medium access control, MAC) layer is met, UE may send an SR to an NG-RAN, to request the NG-RAN to schedule a resource.

The trigger condition of the MAC layer may include one or more of the following (1) to (5):
(1) A triggered buffer status report (buffer status report, BSR) or a pre-emptive BSR (pre-emptive BSR) has no PUSCH transmission opportunity.
(2) A triggered timing advance reporting (timing advance reporting, TA reporting) MAC CE has no PUSCH transmission opportunity, and a timing advance SR is set as enabled.
(3) A triggered listen before talk failure recovery MAC CE (listen before talk failure recovery MAC CE, LBT failure recovery MAC CE) has no PUSCH transmission opportunity.
(4) A triggered pre-configured MG MAC CE has no PUSCH transmission opportunity. The pre-configured MG MAC CE may be a pre-configured MG activated MAC CE, or a pre-configured MG deactivated MAC CE.
(5) A triggered beam failure recovery (beam failure recovery, BFR) for secondary cell (secondary cell, SCell) MAC CE and an enhanced (enhanced) BFR MAC CE have no PUSCH transmission opportunity.

In this application, "no PUSCH transmission opportunity" is, for example, that there is no PUSCH resource for PUSCH transmission or a PUSCH resource for PUSCH transmission does not exist.

Further, after the UE triggers the SR, the SR is in a "pending" state until the UE cancels (cancels) the SR. When the SR is in the pending state, the UE continuously sends the SR in the pending state to the NG-RAN. If a PUCCH resource used to send the SR exists, the UE sends the SR on the PUCCH resource. If a PUCCH resource used to send the SR does not exist, the UE applies for an uplink resource through a random access process.

The UE may cancel the SR in any one of the following cases:
Case 1: For an SR triggered by a BSR, the UE cancels all SRs when the following condition is met: The UE has already sent the BSR, and the BSR includes latest buffer status (buffer status) information; or the UE may send all data in a buffer (buffer) based on the uplink resource.
Case 2: For an SR triggered by a pre-emptive BSR, after successfully sending the pre-emptive BSR, the UE cancels the SR triggered by the pre-emptive BSR.
Case 3: For a BFR MAC CE, after successfully sending the BFR MAC CE, the UE cancels an SR triggered by the BFR MAC CE.
Case 4: For an LBT failure recovery MAC CE, after sending the LBT failure recovery MAC CE or canceling all LBT failures, the UE cancels an SR triggered by the LBT failure recovery MAC CE.

In addition, for the SR, if the UE does not obtain the PUCCH resource used to send the SR, the UE may obtain the uplink resource by sending a random access channel (random access channel, RACH). It may be understood that, in this case, the RACH is triggered by the SR.

The UE may cancel, in any one of the following cases, the RACH triggered by the SR.

Case a: For a RACH triggered by a BSR, the UE cancels the RACH when determining that the following condition is met: The UE obtains the BSR in a non-RACH manner, and the BSR may indicate all data that has arrived since a previous BSR is sent to now; or the uplink resource can accommodate all uplink data.

Case b: For a RACH triggered by an SL-BSR, the UE cancels the RACH when determining that the following condition is met: The UE obtains a BSR in a non-RACH manner, and the BSR may indicate all data that has arrived since a previous BSR is sent to now; or a direct link grant resource can accommodate all direct link data.

Case c: For a RACH triggered by a BFR for SCell, the UE cancels the RACH when determining that the following condition is met: The UE has already sent the BFR for SCell MAC CE by using another uplink resource; or the UE determines that a SCell indicated by the BFR for SCell MAC CE has already been deactivated.

Case d: For a RACH triggered by LBT failure recovery, the UE cancels the RACH when determining that the following condition is met: The UE sends an LBT failure recovery MAC CE by using another uplink resource; or all SCells triggered by the UE for the LBT failure recovery have already been deactivated.

### V. Miscellaneous

The terms "system" and "network" may be used interchangeably in embodiments of this application.

The term "a plurality of" means two or more than two.

The term "and/or" describes an association relationship for describing associated objects and represents that three relationships may exist. For example, A and/or B may represent the following three cases: Only A exists, both A and B exist, and only B exists.

In addition, the character "/" generally represents an "or" relationship between the associated objects.

"At least one of the following items (pieces)" or a similar expression thereof means any combination of these items, including a single item (piece) or any combination of a plurality of items (pieces). For example, at least one (piece) of a, b, or c may represent: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first message and a second message are merely used to distinguish between different messages, and are not used to represent different priorities, sending sequences, or importance degrees of the two types of messages.

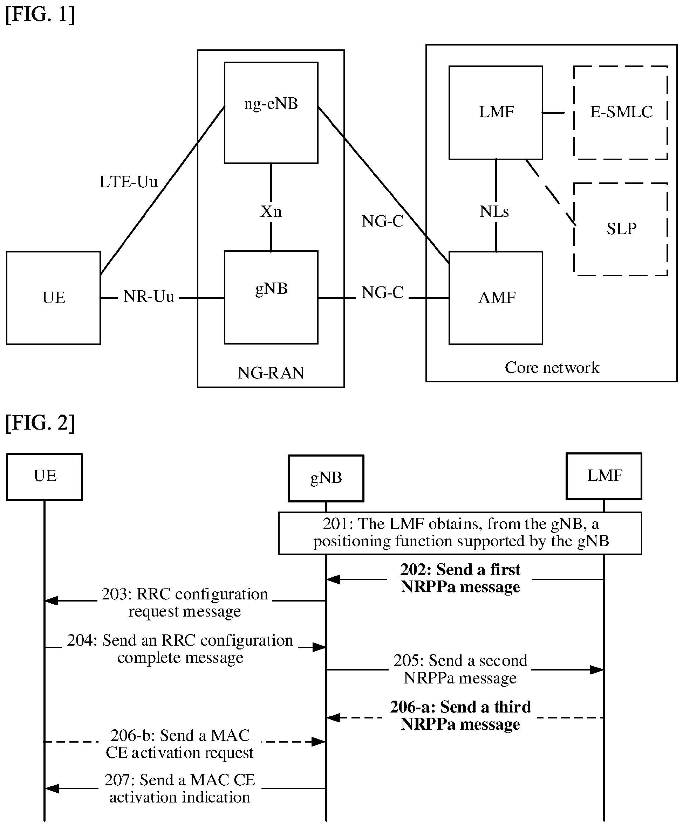

FIG. 1 is a diagram of an architecture of a communication system. Network elements/modules related to the communication system mainly include three parts: an NG-RAN, UE, and a core network.

The core network includes an LMF, an AMF, a service location protocol (service location protocol, SLP), an evolved serving mobile location center (evolved serving mobile location center, E-SMLC), and the like.

The LMF is connected to the AMF through an NLs interface. For example, the AMF may receive a location service request related to the UE from a 5th generation core network location service (5th generation core network location service, 5GC LCS), or the AMF may start some location services on behalf of specific UE, and forward the location service request to the LMF. After obtaining location information returned by the UE, the LMF returns related location information to the 5GC LCS.

The NG-RAN may include a gNB, an ng-eNB, and the like. The gNB is connected to the ng-eNB through an Xn interface, and the AMF is connected to the ng-eNB through an NG-C interface, or the AMF is connected to the gNB through an NG-C interface.

One or more network devices (such as a gNB or an ng-eNB) on an NG-RAN side configure, for the UE, a resource used to send a reference signal, measure an uplink signal such as a reference signal from the UE, and feed back a measurement result to the LMF, to support positioning. The reference signal may be specifically a positioning reference signal (positioning reference signal, PRS). The positioning reference signal is, for example, a sounding reference signal (sounding reference signal, SRS) or a preamble (preamble).

It should be understood that FIG. 1 is merely an example of the communication system to which embodiments of this application are applicable for description, and does not specifically limit a type, a quantity, a connection manner, and the like of network elements included in the communication system to which this application is applicable. In addition, network elements/modules shown by dashed lines in FIG. 1 are optional. For example, the E-SMLC or the SLP is optional.

FIG. 2 is a schematic flowchart of pre-configuration and activation of a measurement gap (measurement gap, MG) for positioning according to this application. An NG-RAN is specifically a gNB.

Step 201: An LMF obtains, from the gNB, a positioning function supported by the gNB.

Step 202: The LMF sends a first NRPPa message to the gNB. Correspondingly, the gNB receives the first NRPPa message from the LMF. The gNB is specifically a serving gNB. The first NRPPa message is used by the LMF to request, from the gNB, PRS configuration information of a neighboring cell gNB of the gNB, and request the gNB to pre-configure a positioning MG for UE. The first NRPPa message is, for example, an NRPPa measurement pre-configuration required (NRPPa measurement pre-configuration required) message.

Step 203: The gNB sends configuration information of the pre-configured MG for positioning to the UE by using an RRC configuration request message. Correspondingly, the UE receives the RRC configuration request message from the gNB, where the RRC configuration request message includes the configuration information of the MG for positioning.

Step 204: After completing pre-configuration based on the configuration information of the MG for positioning, the UE sends an RRC configuration complete message to the gNB. Correspondingly, the gNB receives the RRC configuration complete message from the UE.

Step 205: The gNB sends a second NRPPa message to the LMF. Correspondingly, the LMF receives the second NRPPa message from the gNB. The second NRPPa message indicates, to the LMF, that the configuration information of the MG for positioning has been pre-configured. The second NRPPa message is, for example, an NRPPa measurement reconfiguration confirm (NRPPa measurement reconfiguration confirm) message.

Step 206: The gNB receives a message used to activate the configuration information of the MG for positioning.

Step 206 may specifically include step 206-a and step 206-b.

Step 206-a: The LMF sends a third NRPPa message to the gNB, and correspondingly, the gNB receives the third NRPPa message from the LMF. The third NRPPa message is used by the LMF to request the gNB to activate the configuration information of the pre-configured MG for positioning in the UE. The third NRPPa message is, for example, an NRPPa measurement activation (NRPPa measurement activation) message.

Step 206-b: The UE sends a MAC CE activation request to the gNB, and correspondingly, the gNB receives the MAC CE activation request from the UE. The MAC CE activation request is used to request to activate the configuration information of the pre-configured MG for positioning in the UE. The MAC CE activation request is, for example, an uplink MAC CE positioning MG activation request (uplink MAC CE positioning measurement gap activation request).

Step 207: The gNB sends a MAC CE activation indication to the UE, and correspondingly, the UE receives the MAC CE activation indication from the gNB. The MAC CE activation indication indicates the UE to activate the configuration information of the pre-configured MG for positioning in the UE. The MAC CE activation indication is, for example, a downlink MAC CE positioning MG activation indication (downlink MAC CE positioning measurement gap activation).

It may be understood that, the foregoing step 206 and step 207 may alternatively be a process of deactivating the configuration information of the MG for positioning that has been activated in the UE.

Correspondingly, in step 206-a, the LMF sends a fourth NRPPa message to the gNB, where the fourth NRPPa message is used by the LMF to request the gNB to deactivate the configuration information of the pre-configured MG for positioning in the UE. The fourth NRPPa message is, for example, an NRPPa measurement deactivation (NRPPa measurement inactivation) message.

In step 206-b, the UE sends a MAC CE deactivation request to the gNB, where the MAC CE deactivation request is, for example, an uplink MAC CE positioning MG deactivation request (UL MAC CE positioning measurement gap inactivation request).

In step 207, the gNB sends a MAC CE deactivation indication to the UE, where the MAC CE deactivation indication indicates the UE to deactivate the configuration information of the pre-configured MG for positioning in the UE. The MAC CE deactivation indication is, for example, a downlink MAC CE positioning MG deactivation indication (DL MAC CE positioning measurement gap inactivation).

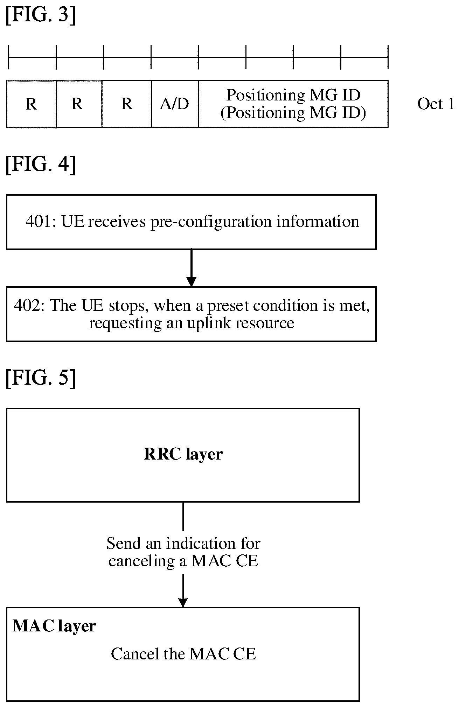

For ease of description, in this embodiment of this application, a MAC CE positioning request and a MAC CE deactivation request are collectively referred to as a MAC CE. For a format of the MAC CE, refer to FIG. 3. Specifically, the MAC CE occupies one byte (oct), and the last 4 bits in the byte include a positioning MG identifier (that is, a positioning MG ID), indicating which MG for positioning the MAC CE is used to activate/deactivate. The first 3 bits in the byte are reserved bits, and a 4^{th} bit is A/D.

In the foregoing step 206-b, a process in which the UE sends the MAC CE to the gNB may be specifically: after receiving an indication from an upper layer (for example, an RRC layer), a MAC layer in the UE triggers the MAC CE. Further, when determining that the MAC CE is in a triggered state, the UE determines whether a PUSCH resource used to send the MAC CE currently exists. If the UE determines that the PUSCH resource used to send the MAC CE does not exist, the UE triggers an SR to request the PUSCH resource. In this case, before obtaining the requested PUSCH resource by using the SR, the UE cannot cancel the SR, that is, the SR remains in a pending state, and a resource occupation problem exists.

Further, the UE determines whether a PUCCH resource used to send the SR currently exists. If determining that the PUCCH resource used to send the SR does not exist, the UE further triggers a RACH to request an uplink resource (including a PUSCH resource and/or a PUCCH resource). In this case, before the UE obtains the requested uplink resource by using the RACH, the UE needs to continuously send the RACH until a quantity of sending times reaches a maximum quantity of sending times of the RACH, and a resource occupation problem also exists.

To resolve the foregoing problem, this application provides a communication method, to stop/cancel the SR in time, and/or stop/cancel the RACH in time, to reduce unnecessary resource occupation.

Refer to descriptions of a schematic flowchart of an example of a communication method shown in FIG. 4.

Step 401: UE receives pre-configuration information.

Optionally, the pre-configuration information is configuration information of a pre-configured MG for positioning. Optionally, the UE receives an RRC message, where the RRC message is specifically an RRC configuration request message, and the RRC configuration request message includes the configuration information of the pre-configured MG for positioning. Correspondingly, the UE receives the RRC configuration request message, and performs pre-configuration based on the configuration information of the pre-configured MG for positioning in the RRC configuration request message.

In addition, the pre-configuration information may alternatively be other configuration information other than the configuration information of the pre-configured MG for positioning.

Specifically, the UE receives pre-configuration information from an NG-RAN.

In a possible manner, when the UE needs to activate the pre-configuration information (for example, positioning measurement needs to be performed), the UE sends an activation request to the NG-RAN. Correspondingly, after receiving the activation request, the NG-RAN sends an activation indication to the UE. After receiving the activation indication from the NG-RAN, the UE activates the pre-configuration information.

For example, the UE determines whether a PUSCH resource used to send the activation request exists. If determining that the PUSCH resource used to send the activation request exists, the UE sends the activation request by using the PUSCH resource. If determining that the PUSCH resource used to send the activation request does not exist, the UE triggers an SR, where the SR is used by the UE to request the PUSCH resource. Further, the UE determines whether a PUCCH resource used to send the SR exists. If determining that the PUCCH resource used to send the SR exists, the UE sends the SR by using the PUCCH resource. If determining that the PUCCH resource used to send the SR does not exist, the UE triggers a RACH, where the RACH is used by the UE to request an uplink resource (a PUCCH resource and/or a PUSCH resource).

In another possible manner, the UE has already activated the pre-configuration information. When the UE needs to deactivate the activated pre-configuration information, the UE sends a deactivation request to the NG-RAN. After receiving the deactivation request, the NG-RAN sends a deactivation indication to the UE. After receiving the deactivation indication from the NG-RAN, the UE deactivates the pre-configuration information.

For example, the UE determines whether a PUSCH resource used to send the deactivation request exists. If determining that the PUSCH resource used to send the deactivation request exists, the UE sends the deactivation request by using the PUSCH resource. If determining that the PUSCH resource used to send the deactivation request does not exist, the UE triggers an SR, where the SR is used by the UE to request the PUSCH resource. Further, the UE determines whether a PUCCH resource used to send the SR exists. If determining that the PUCCH resource used to send the SR exists, the UE sends the SR by using the PUCCH resource. If determining that the PUCCH resource used to send the SR does not exist, the UE triggers a RACH, where the RACH is used by the UE to request an uplink resource (a PUCCH resource and/or a PUSCH resource).

In this application, the activation request and the deactivation request may be collectively referred to as first information. In other words, the first information may be an activation request, or may be a deactivation request. Further, an SR triggered when the UE is to send the first information (which may also be understood that the SR is triggered by the first information) may be referred to as a resource request. Similarly, a RACH triggered when the UE is to send the SR (which may also be understood that the RACH is triggered by the SR) may be referred to as a resource request. It may be understood that the resource request is used to request an uplink resource, and the uplink resource may be used to send the first information. When the first information is the activation request, the first information is used to activate the pre-configuration information. When the first information is the deactivation request, the first information is used to deactivate the pre-configuration information.

Step 402: The UE stops, when a preset condition is met, requesting the uplink resource (or stops sending the resource request).

There may be specifically three implementations in which the UE stops requesting the uplink resource.

### Implementation 1: The UE cancels the first information.

For example, after canceling the first information, the UE may no longer request the PUSCH resource, that is, does not need to send the SR triggered by the first information. Further, when the SR further triggers the RACH, because the UE does not need to request the PUCCH resource used to send the SR, the UE does not need to send the RACH triggered by the SR.

### Implementation 2: The UE cancels the SR triggered by the first information.

For example, when the UE cancels the SR triggered by the first information, the UE may no longer request the PUCCH resource used to send the SR, that is, the UE does not need to send the RACH triggered by the SR.

### Implementation 3: The UE cancels the RACH triggered by the SR.

The following describes the implementation 1 to the implementation 3 with reference to conditions corresponding to the implementation 1 to the implementation 3.

In the implementation 1, when determining that a condition 1 is met, the UE cancels the first information, that is, stops requesting the uplink resource.

Optionally, when the first information is the activation request, the condition 1 may include at least one or more of the following condition 1-1 to condition 1-6.

That the UE determines that the condition 1 is met may be specifically that the UE determines that any one of the condition 1-1 to the condition 1-6 is met.

Condition 1-1: The UE has already activated the pre-configuration information.

It may be understood that, when the UE has already activated the pre-configuration information in another manner, the UE may no longer need to send the activation request, that is, the UE cancels the activation request.

For example, in a process in which the UE requests to activate pre-configuration information 1, an SR is triggered, or a RACH is further triggered. Further, when determining that the pre-configuration information 1 has already been activated, the UE cancels an activation request used to activate the pre-configuration information 1.

In a specific implementation, after the pre-configuration information has already been activated, a MAC layer in the UE no longer needs to send the activation request, that is, the MAC layer in the UE cancels the activation request. Still with reference to the foregoing example, after determining that the pre-configuration information 1 has already been activated, the MAC layer in the UE no longer needs to request to activate the pre-configuration information 1, that is, the MAC layer in the UE cancels the activation request used to activate the pre-configuration information 1.

Condition 1-2: The UE receives new pre-configuration information.

It may be understood that, when the UE receives the new pre-configuration information, it may be considered that the pre-configuration information has already changed, that is, the UE no longer needs to request to activate the pre-configuration information. Optionally, the UE may further request to activate the new pre-configuration information.

For example, the UE requests to activate pre-configuration information 1. When the UE receives new pre-configuration information 2, the UE no longer needs to request to activate the pre-configuration information 1. Optionally, the UE may further request to activate the pre-configuration information 2.

In a specific implementation, the UE includes an RRC layer and a MAC layer. The RRC layer receives an RRC message, where the RRC message includes new pre-configuration information, and then the RRC layer sends the new pre-configuration information to the MAC layer. For the MAC layer, the MAC layer determines that the pre-configuration information has already changed, and no longer needs to request to activate the original pre-configuration information.

Still with reference to the foregoing example, the RRC layer receives the RRC message, where the RRC message includes the pre-configuration information 2. The RRC layer sends the pre-configuration information 2 to the MAC layer. Correspondingly, for the MAC layer, the MAC layer determines that the pre-configuration information has already changed, and no longer needs to request to activate the pre-configuration information 1. Optionally, the MAC layer further requests to activate the pre-configuration information 2.

Condition 1-3: The UE activates other pre-configuration information.

It may be understood that the UE may receive a plurality of pieces of pre-configuration information. When the UE activates other pre-configuration information in the plurality of pieces of pre-configuration information, and the other pre-configuration information can meet a requirement of the UE, the UE no longer needs to activate pre-configuration information that currently needs to be activated.

For example, the UE receives a plurality of pieces of pre-configuration information (for example, pre-configuration information and pre-configuration information b) from the NG-RAN, and the UE triggers an SR when requesting to activate the pre-configuration information a. Further, when the UE determines that the pre-configuration information b has already been activated, and the pre-configuration information b can also meet the requirement of the UE, the UE no longer needs to request to activate the pre-configuration information a.

In a specific implementation, the UE includes an RRC layer and a MAC layer. The RRC layer obtains the plurality of pieces of pre-configuration information by using one or more RRC messages. When the MAC layer requests to activate one of the plurality of pieces of pre-configuration information, the MAC layer triggers an SR because a PUSCH used to send an activation request of the pre-configuration information does not exist. Further, when the MAC layer determines that another of the plurality of pieces of pre-configuration information has already been activated, the MAC layer may cancel sending the activation request of the pre-configuration information.

Still with reference to the foregoing example, the RRC layer receives the RRC message, where the RRC message includes the pre-configuration information a and the pre-configuration information b. The RRC layer sends the pre-configuration information a and the pre-configuration information b to the MAC layer. The MAC layer triggers the SR when requesting to activate the pre-configuration information a. Further, when the MAC layer determines that the pre-configuration information b has already been activated, and the pre-configuration information b can also meet the requirement of the UE, the MAC layer no longer needs to request to activate the pre-configuration information a.

Optionally, the plurality of pieces of pre-configuration information are a plurality of pieces of configuration information of a pre-configured MG for positioning. Further, the requirement that the other pre-configuration information meets may be specifically a measurement requirement. Correspondingly, the UE or the MAC layer in the UE may perform measurement based on the other pre-configuration information that has already been activated. The measurement includes at least one or more of positioning measurement and RRM measurement.

Condition 1-4: The UE receives second information, where the second information is used to modify the pre-configuration information.

It may be understood that when receiving the second information (which may also be referred to as reconfiguration information), the UE needs to modify a configuration parameter in the pre-configuration information based on the second information. In this way, the UE no longer needs to request to activate the pre-configuration information before modification. Optionally, the UE may further request to activate modified pre-configuration information. Optionally, the second information includes a modification parameter, and the modification parameter indicates the UE to modify the pre-configuration information.

For example, the UE receives pre-configuration information 1, and then requests to activate the pre-configuration information 1. When receiving the second information, the UE modifies a configuration parameter in the pre-configuration information 1 based on the second information. In this way, the UE no longer needs to request to activate the pre-configuration information 1 before modification. Optionally, the UE may further request to activate modified pre-configuration information 1.

In a specific implementation, the UE includes an RRC layer and a MAC layer. The RRC layer obtains the second information by using an RRC message. The RRC layer sends the second information to the MAC layer, to indicate the MAC layer to modify the preset configuration information based on the second information. In this way, the MAC layer no longer needs to request to activate the pre-configuration information before modification. Herein, the RRC message may also be referred to as an RRC reconfiguration message.

In addition, in another specific implementation, after obtaining the second information, the RRC layer may further send a cancellation indication to the MAC layer, to indicate the MAC layer to cancel the activation request. That is, after receiving the cancellation indication, the MAC layer may no longer request to activate the pre-configuration information before modification.

Alternatively, the second information sent by the RRC layer to the MAC layer may be understood as the cancellation indication.

For example, the RRC layer receives the RRC message, where the RRC message includes the pre-configuration information 1. The RRC layer sends the pre-configuration information 1 to the MAC layer. The MAC layer triggers the SR when requesting to activate the pre-configuration information 1. Further, the RRC layer receives the RRC message, where the RRC message includes the second information. The RRC layer sends the second information (or the cancellation indication) to the MAC layer. The MAC layer cancels the activation request, that is, the MAC layer no longer needs to request to activate the pre-configuration information 1 before modification.

Condition 1-5: The UE stops measurement.

This manner is applicable to a case in which the pre-configuration information is the configuration information of the pre-configured MG for positioning. It may be understood that when the UE stops measurement, the UE no longer needs to request to activate the pre-configuration information. The measurement includes at least one or more of positioning measurement and RRM measurement.

In a specific implementation, the UE includes an RRC layer and a MAC layer. The RRC layer indicates the MAC layer to stop measurement. Optionally, the RRC layer sends a measurement stop indication to the MAC layer, where the measurement stop indication indicates the MAC layer to stop measurement, that is, to cancel the activation request. Optionally, the RRC layer may further receive an indication from an upper layer (for example, a radio link control (radio link control, RLC) layer or a packet data convergence protocol (packet data convergence protocol, PDCP) layer) of the RRC layer, and further send the measurement stop indication to the MAC layer based on the indication of the upper layer.

Condition 1-6: The UE triggers the deactivation request, where the deactivation request is used to deactivate the pre-configuration information.

It may be understood that, in a process in which the UE triggers the activation request and does not successfully send the activation request, the UE triggers the deactivation request. In this case, the UE no longer needs to send the activation request.

In a specific implementation, the UE includes an RRC layer and a MAC layer. The RRC layer triggers the deactivation request, and sends the deactivation request to the MAC layer. Correspondingly, the MAC layer determines, based on the deactivation request and the activation request that has not been sent, that the activation request and the deactivation request indicate same pre-configuration information. In this case, the MAC layer may no longer need to send the activation request, that is, the MAC layer cancels the activation request. Optionally, when an identifier (for example, a positioning MG ID) of pre-configuration information included in the activation request is the same as an identifier (for example, a positioning MG ID) of pre-configuration information included in the deactivation request, the UE may determine that the activation request and the deactivation request indicate the same pre-configuration information.

Optionally, when the first information is the deactivation request, the condition 1 may include at least one or more of the following condition 1-a and condition 1-b. That the UE determines that the condition 1 is met may be specifically that the UE determines that the condition 1-a or the condition 1-b is met.

Condition 1-a: The UE receives second information, where the second information is used to modify the pre-configuration information.

It may be understood that when receiving the second information, the UE needs to modify a configuration parameter in the pre-configuration information based on the second information. In this way, the pre-configuration information before modification that has already been activated is invalid, that is, the UE no longer needs to request to deactivate the pre-configuration information before modification that has already been activated.

For example, the UE receives pre-configuration information 1, and then requests to deactivate the pre-configuration information 1. When receiving the second information, the UE modifies a configuration parameter in the pre-configuration information 1 based on the second information. In this way, the pre-configuration information 1 before modification that has already been activated is invalid, and the UE no longer needs to request to deactivate the pre-configuration information 1 before modification that has already been activated.

In a specific implementation, the UE includes an RRC layer and a MAC layer. The RRC layer obtains the second information by using an RRC message, and the RRC layer sends a cancellation indication to the MAC layer based on the second information. Correspondingly, the MAC layer cancels the deactivation request based on the cancellation indication. For a specific implementation, refer to descriptions in the condition 1-4. The "activation request" may be replaced with the "deactivation request" for understanding.

Condition 1-b: The UE has already deactivated the pre-configuration information.

It may be understood that when the UE has already deactivated the pre-configuration information in another manner, the UE may no longer need to send the deactivation request, that is, the UE cancels the deactivation request. For example, in a process in which the UE requests to deactivate pre-configuration information 1, an SR is triggered, or a RACH is further triggered. Further, when determining that the pre-configuration information 1 has already been deactivated, the UE cancels a deactivation request used to deactivate the pre-configuration information 1.

In a specific implementation, after the pre-configuration information has already been deactivated, a MAC layer in the UE no longer needs to send the deactivation request, that is, the MAC layer in the UE cancels the deactivation request. Still with reference to the foregoing example, after determining that the pre-configuration information 1 has already been deactivated, the MAC layer in the UE no longer needs to request to deactivate the pre-configuration information 1, that is, the MAC layer in the UE cancels the deactivation request used to deactivate the pre-configuration information 1.

Condition 1-c: The UE triggers the activation request, where the activation request is used to activate the pre-configuration information.

It may be understood that, in a process in which the UE triggers the deactivation request and does not successfully send the deactivation request, the UE triggers the activation request. In this case, the UE no longer needs to send the deactivation request. In a specific implementation, the UE includes an RRC layer and a MAC layer. The RRC layer triggers the activation request, and sends the activation request to the MAC layer. Correspondingly, the MAC layer determines, based on the activation request and the deactivation request that has not been sent, that the deactivation request and the activation request indicate same pre-configuration information. In this case, the MAC layer may no longer need to send the deactivation request, that is, the MAC layer cancels the deactivation request. For a specific implementation, refer to descriptions in the foregoing condition 1-6. The "activation request" may be replaced with the "deactivation request", and the "deactivation request" may be replaced with the "activation request" for understanding.

In an example, the activation request or the deactivation request may be carried in a MAC CE. In an implementation of interaction between the RRC layer and the MAC layer in the UE, when determining that the condition 1 is met, the RRC layer sends an indication for canceling the MAC CE to the MAC layer, to indicate the MAC layer to cancel the MAC CE. For a diagram of interaction between the RRC layer and the MAC layer, refer to FIG. 5. For example, when the RRC layer determines that the condition 1-2 is met, the indication for canceling the MAC CE is specifically the new pre-configuration information; when the RRC layer determines that the condition 1-4 is met, the indication for canceling the MAC CE is specifically the cancellation indication; or when the RRC layer determines that the condition 1-5 is met, the indication for canceling the MAC CE is specifically the measurement stop indication.

In the foregoing implementation 1, a preset condition for the UE to cancel the first information (that is, the activation request or the deactivation request) is provided. When the preset condition is met, the UE may cancel the first information. In this way, the UE does not need to send the first information, that is, does not need to send the SR triggered by the first information, and no longer needs to send the RACH triggered by the SR. This helps reduce a waste of resources.

In the implementation 2, when determining that a condition 2 is met, the UE cancels the SR triggered by the first information.

Optionally, when the first information is the activation request, the condition 2 may include at least one or more of the following condition 2-1 to condition 2-6.

That the UE determines that the condition 2 is met may be specifically that the UE determines that any one of the condition 2-1 to the condition 2-6 is met.

Condition 2-1: The UE has already sent the activation request.

It may be understood that when determining that the PUSCH resource used to send the activation request exists, the UE sends the activation request. In this way, the UE may no longer send the SR, to request the PUSCH resource used to send the activation request.

For example, when the UE needs to send the activation request (for example, at a moment 1), the UE determines that the PUSCH resource does not exist, and therefore triggers the SR (the SR is in a pending state). Further, in a process in which the SR is in the pending state, the UE determines that the PUSCH resource that can be used to send the activation request already exists (for example, at a moment 2). Therefore, after sending the activation request by using the existing PUSCH resource, the UE cancels the SR, where the moment 2 is later than the moment 1.

In a specific implementation, after the activation request has already been sent, a MAC layer in the UE cancels the SR triggered by the activation request. In a specific implementation, when the MAC layer in the UE completes packet assembly of the activation request, it may be considered that the activation request has already been sent.

In a specific implementation, the UE may trigger a plurality of activation requests, and the plurality of activation requests trigger respective SRs. Correspondingly, after determining that all the activation requests have already been sent, the UE may cancel all the SRs corresponding to all the activation requests, or cancel some of all the SRs corresponding to all the activation requests. Alternatively, after determining that one of the activation requests has already been sent, the UE cancels an SR triggered by the activation request.

For example, the UE triggers an activation request 1 and an activation request 2, and the activation request 1 and the activation request 2 respectively trigger an SR 1 and an SR 2. In an example, after the activation request 1 and the activation request 2 have already been sent, the UE cancels the SR 1 and the SR 2. In another example, after the activation request 1 and the activation request 2 have already been sent, the UE cancels the SR 1 or the SR 2. Alternatively, after the activation request 1 has already been sent, the UE cancels the SR 1 triggered by the activation request 1, and after the activation request 2 has already been sent, the UE cancels the SR 2 triggered by the activation request 2.

Condition 2-2: The UE cancels the activation request.

It may be understood that, after canceling the activation request, the UE may no longer need to request the PUSCH resource used to send the activation request, that is, the UE does not need to send the SR triggered by the activation request.

For a condition for the UE to cancel the activation request, refer to the foregoing implementation 1.

In a specific implementation, a MAC layer in the UE cancels the activation request, and then the MAC layer cancels the SR triggered by the activation request.

In a specific implementation, the UE may trigger a plurality of activation requests, and the plurality of activation requests trigger respective SRs. Correspondingly, after all the activation requests have already been canceled, the UE may cancel all the SRs corresponding to all the activation requests, or cancel some of all the SRs corresponding to all the activation requests. Alternatively, after determining that one of the activation requests has already been canceled, the UE cancels an SR triggered by the activation request.

For example, the UE triggers an activation request 1 and an activation request 2, and the activation request 1 and the activation request 2 respectively trigger an SR 1 and an SR 2. In an example, after the activation request 1 and the activation request 2 have already been canceled, the UE cancels the SR 1 and the SR 2. In another example, after the activation request 1 and the activation request 2 have already been canceled, the UE cancels one or more of the SR 1 and the SR 2. Alternatively, after the activation request 1 is canceled, the UE cancels the SR 1 triggered by the activation request 1, and after the activation request 2 has already been canceled, the UE cancels the SR 2 triggered by the activation request 2.

Condition 2-3: The UE receives second information, where the second information is used to modify the pre-configuration information.

It may be understood that, when receiving the second information (which may also be referred to as reconfiguration information), the UE does not need to send an activation request used to activate the pre-configuration information before modification. For specific descriptions, refer to descriptions in the foregoing condition 1-4. Further, the UE does not need to send an SR (that is, an SR triggered by the activation request) used to request a PUSCH resource.

In a specific implementation, the UE includes an RRC layer and a MAC layer. The RRC layer obtains the second information by using an RRC message (which may be specifically an RRC reconfiguration message). The RRC layer sends a cancellation indication to the MAC layer, to indicate the MAC layer to cancel the activation request. For specific descriptions, refer to descriptions in the foregoing condition 1-4. Correspondingly, the MAC layer may not only cancel the activation request, but also cancel the SR triggered by the activation request.

Condition 2-4: The UE has already activated the pre-configuration information.

It may be understood that, when the UE has already activated the pre-configuration information in another manner, the UE may cancel the activation request, that is, the UE does not need to send the SR triggered by the activation request. In a specific implementation, after a MAC layer in the UE has already activated the pre-configuration information, the MAC layer may cancel the activation request, that is, the MAC layer does not need to send the SR triggered by the activation request.

For details, refer to descriptions in the foregoing condition 1-1.

Condition 2-5: The UE receives new pre-configuration information.

It may be understood that, when the UE receives the new pre-configuration information, it may be considered that the pre-configuration information has already changed. The UE no longer needs to request to activate the pre-configuration information, that is, the UE cancels the activation request. Further, the UE determines that the SR triggered by the activation request does not need to be sent, that is, the UE cancels the SR.

In a specific implementation, the UE includes an RRC layer and a MAC layer. The RRC layer receives an RRC message, where the RRC message includes new pre-configuration information, and then the RRC layer sends the new pre-configuration information to the MAC layer. Correspondingly, for the MAC layer, the MAC layer determines that the pre-configuration information has already changed, and cancels the activation request. Further, the MAC layer cancels the SR triggered by the activation request.

For details, refer to descriptions in the foregoing condition 1-2.

Condition 2-6: The UE stops measurement.

This manner is applicable to a case in which the pre-configuration information is the configuration information of the pre-configured MG for positioning. It may be understood that, when the UE stops measurement, the UE cancels the activation request, and further cancels the SR triggered by the activation request. The measurement includes at least one or more of positioning measurement and RRM measurement.

In a specific implementation, the UE includes an RRC layer and a MAC layer. The RRC layer indicates the MAC layer to stop measurement. Optionally, the RRC layer sends a measurement stop indication to the MAC layer, where the measurement stop indication indicates the MAC layer to stop measurement, that is, to cancel the activation request. After canceling the activation request, the MAC layer further cancels the SR triggered by the activation request. Optionally, the RRC layer may further receive an indication from an upper layer (for example, an RLC layer or a PDCP layer) of the RRC layer, and send the measurement stop indication to the MAC layer based on the indication of the upper layer.

It should be noted that, the UE (or the MAC layer in the UE) may first cancel the activation request, and then cancel the SR triggered by the activation request. Alternatively, in another possible manner, the UE (or the MAC layer in the UE) directly cancels the SR triggered by the activation request.

Optionally, when the first information is the deactivation request, the condition 2 may include at least one or more of the following condition 2-a to condition 2-d.

That the UE determines that the condition 2 is met may be specifically that the UE determines that one or more of the condition 2-a to the condition 2-d are met.

Condition 2-a: The UE has already sent the deactivation request.

It may be understood that, when determining that the PUSCH resource used to send the deactivation request exists, the UE sends the deactivation request. In this way, the UE may no longer send the SR triggered by the deactivation request.

For example, when the UE needs to send the deactivation request (for example, at a moment a), the UE determines that the PUSCH resource does not exist, and therefore triggers the SR (the SR is in a pending state). Further, in a process in which the SR is in the pending state, the UE determines that the PUSCH resource that can be used to send the deactivation request already exists (for example, at a moment b). Therefore, after sending the deactivation request by using the PUSCH resource, the UE cancels the SR triggered by the deactivation request, where the moment b is later than the moment a.

In a specific implementation, after the deactivation request has already been sent, a MAC layer in the UE cancels the SR triggered by the deactivation request. In a specific implementation, when the MAC layer in the UE completes packet assembly of the deactivation request, it may be considered that the deactivation request has already been sent.

In a specific implementation, the UE may trigger a plurality of deactivation requests, and the plurality of deactivation requests trigger respective SRs. Correspondingly, after determining that all the deactivation requests have already been sent, the UE may cancel all the SRs corresponding to all the deactivation requests, or cancel some of all the SRs corresponding to all the deactivation requests. Alternatively, after determining that one of the deactivation requests has already been sent, the UE cancels an SR triggered by the deactivation request. For a specific example, refer to descriptions in the condition 2-1. The "activation request" is replaced with the "deactivation request" for understanding.

Condition 2-b: The UE cancels the deactivation request.

It may be understood that, after canceling the deactivation request, the UE may no longer need to request the PUSCH resource used to send the deactivation request, that is, the UE does not need to send the SR triggered by the deactivation request.

For a condition for the UE to cancel the deactivation request, refer to the foregoing implementation 1.

In a specific implementation, a MAC layer in the UE cancels the deactivation request, and further the MAC layer cancels the SR triggered by the deactivation request.

In a specific implementation, the UE may trigger a plurality of deactivation requests, and the plurality of deactivation requests trigger respective SRs. Correspondingly, after all the deactivation requests have already been canceled, the UE may cancel all the SRs corresponding to all the deactivation requests, or cancel some of all the SRs corresponding to all the deactivation requests. Alternatively, after determining that one of the deactivation requests has already been canceled, the UE cancels an SR triggered by the deactivation request. For a specific example, refer to descriptions in the condition 2-2. The "activation request" is replaced with the "deactivation request" for understanding.

Condition 2-c: The UE receives second information, where the second information is used to modify the pre-configuration information.

It may be understood that, when receiving the second information (which may also be referred to as reconfiguration information), the UE does not need to send a deactivation request used to deactivate the pre-configuration information before modification. For specific descriptions, refer to descriptions in the foregoing condition 2-3. Further, the UE does not need to send an SR (that is, an SR triggered by the deactivation request) used to request a PUSCH resource.

In a specific implementation, the UE includes an RRC layer and a MAC layer. The RRC layer obtains the second information by using an RRC message (which is specifically an RRC reconfiguration message). The RRC layer sends a cancellation indication to the MAC layer, to indicate the MAC layer to cancel the deactivation request. The MAC layer may not only cancel the deactivation request, but also cancel the SR triggered by the deactivation request. For specific descriptions, refer to descriptions in the foregoing condition 2-3. The "activation request" is replaced with the "deactivation request" for understanding.

Condition 2-d: The UE has already deactivated the pre-configuration information.

It may be understood that, when the UE has already deactivated the pre-configuration information in another manner, the UE may no longer request the PUSCH resource used to send the deactivation request, that is, the UE does not need to send the SR triggered by the deactivation request.

In a specific implementation, a MAC layer in the UE has already deactivated the pre-configuration information, and the MAC layer may further cancel the SR triggered by the deactivation request.

In addition, it should be noted that the UE (or the MAC layer in the UE) may first cancel the deactivation request, and then cancel the SR triggered by the deactivation request. Alternatively, in another possible manner, the UE (or the MAC layer in the UE) directly cancels the SR triggered by the deactivation request.

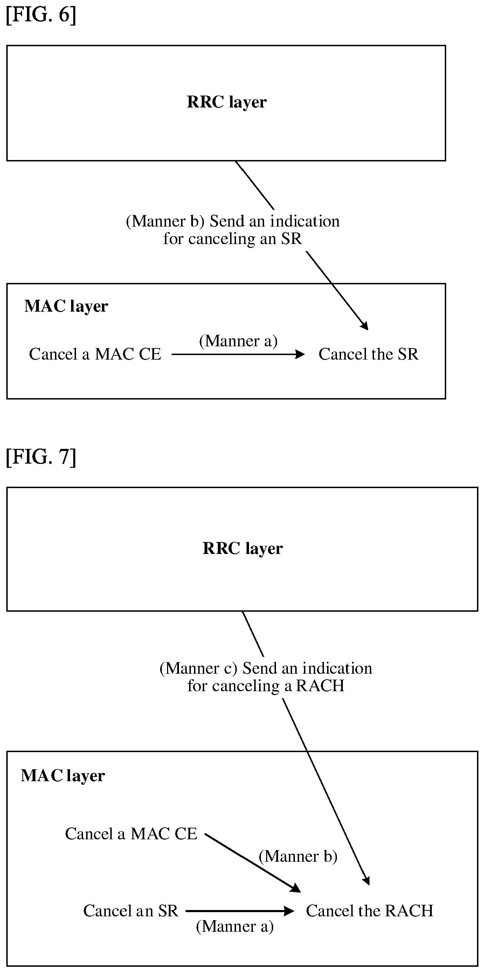

In a specific implementation, the activation request or the deactivation request may be carried in a MAC CE. After canceling the MAC CE, the MAC layer may cancel an SR triggered by the MAC CE. For a diagram of canceling the SR triggered by the MAC CE inside the MAC layer, refer to a manner a in FIG. 6. In addition, after receiving the second information, the RRC layer may further directly send a cancellation indication to the MAC layer, to indicate the MAC layer to cancel the SR triggered by the MAC CE. After receiving an indication from an upper layer, RRC sends a measurement stop indication to the MAC layer, where the measurement stop indication indicates the MAC layer to stop measurement, that is, to cancel the SR triggered by the MAC CE. Herein, the cancellation indication and the measurement stop indication may be collectively referred to as an indication for canceling the SR. For a diagram of sending, by the RRC layer, the indication for canceling the SR to the MAC layer, refer to a manner b in FIG. 6.

In the foregoing implementation 2, a preset condition for the UE to cancel the SR is provided. When the preset condition is met, the UE may cancel the SR. This helps reduce a waste of resources.

In the implementation 3, when determining that a condition 3 is met, the UE cancels the RACH.

Optionally, when the first information is the activation request, the condition 3 may include at least one or more of the following condition 3-1 to condition 3-6.

That the UE determines that the condition 3 is met may be specifically that the UE determines that any one of the condition 3-1 to the condition 3-6 is met.

Condition 3-1: The UE cancels the activation request.

It may be understood that, after canceling the activation request, the UE may no longer need to request the PUSCH resource used to send the activation request, that is, the UE does not need to send the SR triggered by the activation request. Further, the UE may no longer need to request the PUCCH resource used to send the SR, that is, the UE does not need to send the RACH triggered by the SR.

For a condition for the UE to cancel the activation request, refer to the foregoing implementation 1.

In a specific implementation, after canceling the activation request, a MAC layer in the UE cancels the SR triggered by the activation request, and then cancels the RACH triggered by the SR.

Condition 3-2: The UE cancels the SR triggered by the activation request.

It may be understood that, after canceling the SR, the UE may no longer need to request the PUCCH resource used to send the SR, that is, the UE does not need to send the RACH triggered by the SR.

For a condition for the UE to cancel the SR triggered by the activation request, refer to the foregoing implementation 2.

In a specific implementation, after canceling the SR triggered by the activation request, a MAC layer in the UE cancels the RACH triggered by the SR.

Condition 3-3: The UE stops measurement.

This manner is applicable to a case in which the pre-configuration information is the configuration information of the pre-configured MG for positioning. It may be understood that, when the UE stops measurement, after canceling the activation request, the UE cancels the SR triggered by the activation request, and then cancels the RACH triggered by the SR. The measurement includes at least one or more of positioning measurement and RRM measurement.

In a specific implementation, the UE includes an RRC layer and a MAC layer. The RRC layer indicates the MAC layer to stop measurement. Optionally, the RRC layer sends a measurement stop indication to the MAC layer, where the measurement stop indication indicates the MAC layer to stop measurement, that is, to cancel the activation request. After canceling the activation request, the MAC layer cancels the SR triggered by the activation request, and then cancels the RACH triggered by the SR. Optionally, the RRC layer may further receive an indication from an upper layer (for example, an RLC layer or a PDCP layer) of the RRC layer, and send the measurement stop indication to the MAC layer based on the indication of the upper layer.

Condition 3-4: The UE receives second information, where the second information is used to modify the pre-configuration information.

It may be understood that, when receiving the second information, the UE does not need to send an activation request used to activate the pre-configuration information before modification. For specific descriptions, refer to descriptions in the foregoing condition 1-4. Further, the UE does not need to send an SR (that is, an SR triggered by the activation request) used to request a PUSCH resource, and does not need to send a RACH (that is, a RACH triggered by the SR) used to request a PUCCH resource.

In a specific implementation, the UE includes an RRC layer and a MAC layer. The RRC layer obtains the second information by using an RRC message. The RRC layer sends a cancellation indication to the MAC layer, to indicate the MAC layer to cancel the activation request. For specific descriptions, refer to descriptions in the foregoing condition 1-4. Correspondingly, the MAC layer may not only cancel the activation request, but also cancel the SR triggered by the activation request, and further cancel the RACH triggered by the SR.

Condition 3-5: The UE has already activated the pre-configuration information.

It may be understood that, when the UE has already activated the pre-configuration information in another manner, the UE may cancel the activation request, that is, the UE does not need to send the SR triggered by the activation request, and further, the UE does not need to send the RACH trigger by the SR.

In a specific implementation, after a MAC layer in the UE determines that the pre-configuration information has already been activated, the MAC layer cancels the activation request, further cancels the SR triggered by the activation request, and cancels the RACH triggered by the SR.

Condition 3-6: The UE receives new pre-configuration information.

It may be understood that, when the UE receives the new pre-configuration information, it may be considered that the pre-configuration information has already changed. The UE no longer needs to request to activate the pre-configuration information, that is, the UE cancels the activation request. Further, the UE determines that the SR triggered by the activation request does not need to be sent, that is, the UE cancels the SR. Subsequently, the UE determines that the RACH triggered by the SR does not need to be sent, that is, the UE cancels the RACH.

In a specific implementation, after receiving the new pre-configuration information, a MAC layer in the UE cancels the activation request, further cancels the SR, and then cancels the RACH.

It should be noted that, the UE may first cancel the activation request, then cancel the SR triggered by the activation request, and then cancel the RACH triggered by the SR. Alternatively, in another possible manner, the UE directly cancels the RACH triggered by the SR.

Optionally, when the first information is the deactivation request, the condition 3 may include at least one or more of the following condition 3-a to condition 3-d.

That the UE determines that the condition 3 is met may be specifically that the UE determines that any one of the condition 3-a to the condition 3-d is met.

Condition 3-a: The UE cancels the deactivation request.

It may be understood that, after canceling the deactivation request, the UE may no longer need to request the PUSCH resource used to send the deactivation request, that is, the UE cancels the SR triggered by the deactivation request. For a condition for the UE to cancel the deactivation request, refer to the foregoing implementation 1. Further, after canceling the SR, the UE may no longer need to request the PUCCH resource used to send the SR, that is, the UE cancels the RACH triggered by the SR.

In a specific implementation, after canceling the deactivation request, a MAC layer in the UE cancels the SR, and then cancels the RACH.

Condition 3-b: The UE cancels the SR triggered by the deactivation request.

It may be understood that, after canceling the SR triggered by the deactivation request, the UE may no longer need to request the PUCCH resource used to send the SR, that is, does not need to send the RACH triggered by the SR. For a condition for the UE to cancel the SR, refer to the foregoing implementation 2.

In a specific implementation, a MAC layer in the UE cancels the SR, to further cancel the RACH.

Condition 3-c: The UE receives second information, where the second information is used to modify the pre-configuration information.

It may be understood that, when receiving the second information, the UE does not need to send a deactivation request used to deactivate the pre-configuration information before modification. For specific descriptions, refer to descriptions in the foregoing condition 1-4. Further, the UE does not need to send an SR (that is, an SR triggered by the deactivation request) used to request a PUSCH resource. The UE does not need to send a RACH (that is, a RACH triggered by the SR) used to request a PUCCH resource.

In a specific implementation, the UE includes an RRC layer and a MAC layer. The RRC layer obtains the second information by using an RRC message. The RRC layer sends a cancellation indication to the MAC layer, to indicate the MAC layer to cancel the deactivation request. Correspondingly, the MAC layer may not only cancel the deactivation request, but also cancel the SR triggered by the deactivation request and the RACH triggered by the SR.

Condition 3-d: The UE has already deactivated the pre-configuration information.

It may be understood that, when the UE has already deactivated the pre-configuration information in another manner, the UE may no longer request the PUSCH resource used to send the deactivation request, that is, the UE does not need to send the SR triggered by the deactivation request. Further, the UE no longer requests the PUCCH resource used to send the SR, that is, the UE does not need to send the RACH triggered by the SR.

In a specific implementation, a MAC layer in the UE has already deactivated the pre-configuration information, and further cancels the SR triggered by the deactivation request and the RACH triggered by the SR.

In addition, it should be noted that, the UE may first cancel the deactivation request, then cancel the SR triggered by the deactivation request, and then cancel the RACH triggered by the SR. Alternatively, in another possible manner, the UE directly cancels the RACH triggered by the SR.

In a specific implementation, the activation request or the deactivation request may be carried in a MAC CE.

After canceling the MAC CE, the MAC layer in the UE further cancels an SR triggered by the MAC CE and a RACH triggered by the SR (referring to a manner b in FIG. 7). Alternatively, after canceling an SR triggered by the MAC CE, the MAC layer further cancels a RACH triggered by the SR (referring to a manner a in FIG. 7). In addition, after receiving the second information, RRC may further directly send a cancellation indication to the MAC layer, to indicate the MAC layer to cancel the RACH triggered by the SR. After receiving an indication from an upper layer, the RRC layer sends a measurement stop indication to the MAC layer, where the measurement stop indication indicates the MAC layer to stop measurement, that is, to cancel the RACH triggered by the SR. Herein, the cancellation indication and the measurement stop indication may be collectively referred to as an indication for canceling the RACH. For a diagram of sending, by the RRC layer, the indication for canceling the RACH to the MAC layer, refer to a manner c in FIG. 6.

In the foregoing implementation 3, a preset condition for the UE to cancel the RACH is provided. When the preset condition is met, the UE may cancel the RACH. In this way, the UE no longer sends the RACH. This helps reduce a waste of resources.

It should be added that, in this application, the UE mainly interacts with the NG-RAN. For example, the UE receives the pre-configuration information, the second information, and the like from the NG-RAN, and the UE sends the first information, the SR, the RACH, and the like to the NG-RAN.

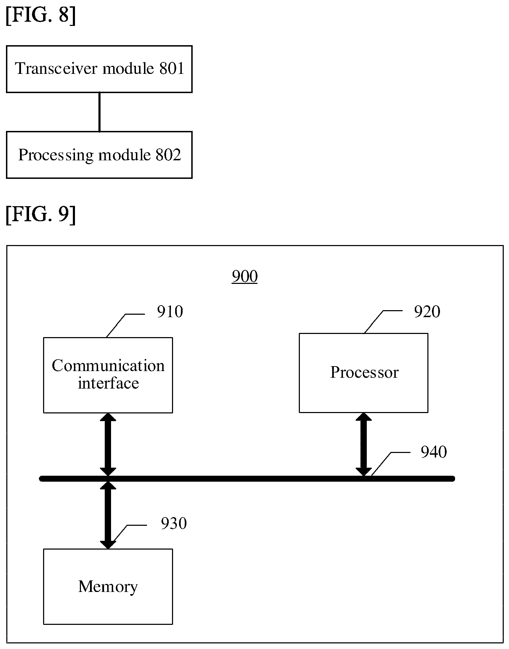

Based on the foregoing content and a same concept, FIG. 8 and FIG. 9 are diagrams of structures of possible communication apparatuses according to this application. These communication apparatuses may be configured to implement a function of UE in the foregoing method embodiments, and therefore can also implement beneficial effects of the foregoing method embodiments. In this application, the communication apparatus may be the UE shown in FIG. 1, or may be a module (for example, a chip) applicable to the UE.

As shown in FIG. 8, the communication apparatus 800 includes a transceiver module 801 and a processing module 802. The communication apparatus 800 is configured to implement a function of the UE in the method embodiments shown in FIG. 4.

The communication apparatus 800 includes:
a transceiver module 801, configured to receive pre-configuration information; and
a processing module 802, configured to stop, when a preset condition is met, requesting an uplink resource, where the uplink resource is used to send first information, and when the first information is an activation request, the first information is used to activate the pre-configuration information; or when the first information is a deactivation request, the first information is used to deactivate the pre-configuration information.

In a possible implementation, the pre-configuration information is configuration information of a pre-configured MG for positioning.

In a possible implementation, when a PUSCH resource used to send the first information does not exist, the processing module 802 is further configured to trigger a scheduling request SR, where the SR is used to request the PUSCH resource.

In a possible implementation, when a PUCCH resource used to send the SR does not exist, the processing module 802 is further configured to trigger a RACH, where the RACH is used to request the uplink resource.

In a possible implementation, the processing module 802 is specifically configured to: when the communication apparatus 800 meets the preset condition, cancel the first information, and stop requesting the uplink resource, where
when the first information is the activation request, the preset condition includes one or more of the following: measurement is to be stopped; new pre-configuration information is received; other pre-configuration information is activated, where the other pre-configuration information meets a measurement requirement; second information is received, where the second information is used to modify the pre-configuration information; and the pre-configuration information has already been activated, where the measurement includes at least one or more of positioning measurement and RRM measurement; and/or
when the first information is the deactivation request, the preset condition includes one or more of the following: second information is received, where the second information is used to modify the pre-configuration information; and the pre-configuration information has already been deactivated.

In a possible implementation, the UE includes an RRC layer and a MAC layer.

When the first information is the activation request, the preset condition includes one or more of the following: the RRC layer indicates the MAC layer to stop measurement; the RRC layer receives new pre-configuration information, and sends the new pre-configuration information to the MAC layer; the MAC layer activates other pre-configuration information; the RRC layer receives the second information, and the RRC layer sends a cancellation indication to the MAC layer, where the cancellation indication is used to cancel the activation request; and the MAC layer has already activated the pre-configuration information; and/or
when the first information is the deactivation request, the preset condition includes one or more of the following: the RRC layer receives the second information, and the RRC layer sends a cancellation indication to the MAC layer, where the cancellation indication is used to cancel the deactivation request; and the MAC layer has already deactivated the pre-configuration information.

In a possible implementation, the processing module 802 is specifically configured to: cancel, when the communication apparatus 800 meets the preset condition, the SR triggered by the first information, where the SR is used to request the PUSCH resource, and the PUSCH resource is used to send the first information.

When the first information is the activation request, the preset condition includes one or more of the following: the activation request has already been sent; the activation request is canceled; measurement is to be stopped, where the measurement includes at least one or more of positioning measurement and RRM measurement; second information is received, where the second information is used to modify the pre-configuration information; the pre-configuration information has already been activated; and new pre-configuration information is received; and/or
when the first information is the deactivation request, the preset condition includes one or more of the following: the deactivation request has already been sent; second information is received, where the second information is used to modify the pre-configuration information; the deactivation request is canceled; and the pre-configuration information has already been deactivated.

In a possible implementation, the UE includes an RRC layer and a MAC layer.

When the first information is the activation request, the preset condition includes one or more of the following: the MAC layer has already sent the activation request; the MAC layer cancels the activation request; the RRC layer indicates the MAC layer to stop measurement; the RRC layer receives the second information, and the RRC layer sends a cancellation indication to the MAC layer, where the cancellation indication is used to cancel the activation request; the MAC layer has already activated the pre-configuration information; and the RRC layer receives new pre-configuration information, and sends the new pre-configuration information to the MAC layer; and/or
when the first information is the deactivation request, the preset condition includes one or more of the following: the MAC layer has already sent the deactivation request; the RRC layer receives the second information, and the RRC layer sends a cancellation indication to the MAC layer, where the cancellation indication is used to cancel the deactivation request; the MAC layer cancels the deactivation request; and the MAC layer has already deactivated the pre-configuration information.

In a possible implementation, that the activation request has already been sent includes: after packet assembly of the activation request is performed, determining that the activation request has already been sent; and/or that the deactivation request has already been sent includes: after packet assembly of the deactivation request is performed, determining that the UE has already sent the deactivation request.

In a possible implementation, the processing module 802 is specifically configured to: cancel, when the communication apparatus 800 meets the preset condition, the RACH triggered by the SR, where the RACH is used to request the uplink resource.

When the first information is the activation request, the preset condition includes one or more of the following: the activation request is canceled; the SR triggered by the activation request is canceled; measurement is to be stopped, where the measurement includes at least one or more of positioning measurement and RRM measurement; second information is received, where the second information is used to modify the pre-configuration information; the pre-configuration information has already been activated; and new pre-configuration information is received; and/or
when the first information is the deactivation request, the preset condition includes one or more of the following: second information is received, where the second information is used to modify the pre-configuration information; the deactivation request is canceled; the SR triggered by the deactivation request is canceled; and the pre-configuration information has already been deactivated.

In a possible implementation, the UE includes an RRC layer and a MAC layer.

When the first information is the activation request, the preset condition includes one or more of the following: the MAC layer cancels the activation request; the MAC layer cancels the SR triggered by the activation request; the RRC layer indicates the MAC layer to stop measurement; the RRC layer receives the second information and sends a cancellation indication to the MAC layer, where the cancellation indication is used to cancel the activation request; the MAC layer has already activated the pre-configuration information; and the RRC layer receives new pre-configuration information, and sends the new pre-configuration information to the MAC layer; and/or when the first information is the deactivation request, the preset condition includes one or more of the following: the RRC layer receives the second information, and the RRC layer sends a cancellation indication to the MAC layer, where the cancellation indication is used to cancel the deactivation request; the MAC layer cancels the deactivation request; the MAC layer cancels the SR triggered by the deactivation request; and the MAC layer has already deactivated the pre-configuration information.

In a possible implementation, the first information is a MAC CE.

FIG. 9 shows an apparatus 900 according to an embodiment of this application. The apparatus shown in FIG. 9 may be an implementation of a hardware circuit of the apparatus shown in FIG. 8. The apparatus may be applicable to performing functions of the UE in the foregoing method embodiments in the flowchart shown above. For ease of description, FIG. 9 shows only main components of the apparatus.

The apparatus 900 shown in FIG. 9 includes a communication interface 910, a processor 920, and a memory 930. The memory 930 is configured to store program instructions and/or data. The processor 920 may operate in collaboration with the memory 930. The processor 920 may execute the program instructions stored in the memory 930. When the instructions or the program stored in the memory 930 is executed, the processor 920 is configured to perform operations performed by the processing module 802 in the foregoing embodiment, and the communication interface 910 is configured to perform operations performed by the transceiver module 801 in the foregoing embodiment.

The memory 930 is coupled to the processor 920. The coupling in this embodiment of this application may be an indirect coupling or a communication connection between apparatuses, units, or modules in an electrical form, a mechanical form, or another form, and is used for information exchange between the apparatuses, the units, or the modules. At least one of memories 930 may be included in the processor 920.

In this embodiment of this application, the communication interface may be a transceiver, a circuit, a bus, a module, or another type of communication interface. In this embodiment of this application, when the communication interface is the transceiver, the transceiver may include an independent receiver and an independent transmitter, or may be a transceiver or a communication interface integrated with a transceiver function.

The apparatus 900 may further include a communication line 940. The communication interface 910, the processor 920, and the memory 930 may be interconnected by using the communication line 940. The communication line 940 may be a peripheral component interconnect (peripheral component interconnect, PCI for short) bus, an extended industry standard architecture (extended industry standard architecture, EISA for short) bus, or the like. The communication line 940 may be classified into an address bus, a data bus, a control bus, and the like. For ease of representation, only one thick line is used to represent the bus in FIG. 9, but this does not mean that there is only one bus or only one type of bus.

Based on the foregoing content and a same concept, an embodiment of this application provides a computer-readable storage medium. The computer-readable storage medium stores a computer program or instructions. When the computer program or the instructions are executed by a communication apparatus, the communication apparatus is enabled to perform the method in the foregoing method embodiments.

Based on the foregoing content and a same concept, an embodiment of this application provides a computer program product. When a communication apparatus reads and executes the computer program product, the communication apparatus is enabled to perform the method in the foregoing method embodiments.

It may be understood that various numbers in embodiments of this application are merely used for differentiation for ease of description, and are not intended to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the protection scope of this application. In this way, this application is intended to cover these modifications and variations of this application provided that these modifications and variations fall within the scope of the claims of this application and their equivalent technologies.

## Claims

1. A communication method, comprising:
receiving, by a terminal device UE, pre-configuration information; and
stopping, by the UE when a preset condition is met, requesting an uplink resource, wherein
the uplink resource is used to send first information, and
when the first information is an activation request, the first information is used to activate the pre-configuration information; or when the first information is a deactivation request, the first information is used to deactivate the pre-configuration information.

2. The method according to claim 1, wherein the pre-configuration information is configuration information of a pre-configured measurement gap MG for positioning.

3. The method according to claim 1 or 2, further comprising:
triggering, by the UE, a scheduling request SR when a physical uplink shared channel PUSCH resource used to send the first information does not exist, wherein the SR is used to request the PUSCH resource.

4. The method according to claim 3, further comprising:
triggering, by the UE, a random access channel RACH when a physical uplink control channel PUCCH resource used to send the SR does not exist, wherein the RACH is used to request the uplink resource.

5. The method according to any one of claims 1 to 4, wherein
the stopping, by the UE when a preset condition is met, requesting an uplink resource comprises:
when the preset condition is met, canceling, by the UE, the first information, and stopping requesting the uplink resource, wherein
when the first information is the activation request, the preset condition comprises one or more of the following: measurement is to be stopped; new pre-configuration information is received; other pre-configuration information is activated, wherein the other pre-configuration information meets a measurement requirement; second information is received, wherein the second information is used to modify the pre-configuration information; and the pre-configuration information has already been activated, wherein the measurement comprises at least one or more of positioning measurement and radio resource management RRM measurement; and/or
when the first information is the deactivation request, the preset condition comprises one or more of the following: second information is received, wherein the second information is used to modify the pre-configuration information; and the pre-configuration information has already been deactivated.

6. The method according to claim 5, wherein the UE comprises a radio resource control RRC layer and a medium access control MAC layer; and
when the first information is the activation request, the preset condition comprises one or more of the following: the RRC layer indicates the MAC layer to stop measurement; the RRC layer receives new pre-configuration information, and sends the new pre-configuration information to the MAC layer; the MAC layer activates other pre-configuration information; the RRC layer receives the second information, and the RRC layer sends a cancellation indication to the MAC layer, wherein the cancellation indication is used to cancel the activation request; and the MAC layer has already activated the pre-configuration information; and/or
when the first information is the deactivation request, the preset condition comprises one or more of the following: the RRC layer receives the second information, and the RRC layer sends a cancellation indication to the MAC layer, wherein the cancellation indication is used to cancel the deactivation request; and the MAC layer has already deactivated the pre-configuration information.

7. The method according to any one of claims 1 to 4, wherein the stopping, by the UE when a preset condition is met, requesting an uplink resource comprises:
canceling, by the UE when the preset condition is met, the SR triggered by the first information, wherein the SR is used to request the PUSCH resource, and the PUSCH resource is used to send the first information; and
when the first information is the activation request, the preset condition comprises one or more of the following: the activation request has already been sent; the activation request is canceled; measurement is to be stopped, wherein the measurement comprises at least one or more of positioning measurement and RRM measurement; second information is received, wherein the second information is used to modify the pre-configuration information; the pre-configuration information has already been activated; and new pre-configuration information is received; and/or
when the first information is the deactivation request, the preset condition comprises one or more of the following: the deactivation request has already been sent; second information is received, wherein the second information is used to modify the pre-configuration information; the deactivation request is canceled; and the pre-configuration information has already been deactivated.

8. The method according to claim 7, wherein the UE comprises an RRC layer and a MAC layer; and
when the first information is the activation request, the preset condition comprises one or more of the following: the MAC layer has already sent the activation request; the MAC layer cancels the activation request; the RRC layer indicates the MAC layer to stop measurement; the RRC layer receives the second information, and the RRC layer sends a cancellation indication to the MAC layer, wherein the cancellation indication is used to cancel the activation request; the MAC layer has already activated the pre-configuration information; and the RRC layer receives new pre-configuration information, and sends the new pre-configuration information to the MAC layer; and/or
when the first information is the deactivation request, the preset condition comprises one or more of the following: the MAC layer has already sent the deactivation request; the RRC layer receives the second information, and the RRC layer sends a cancellation indication to the MAC layer, wherein the cancellation indication is used to cancel the deactivation request; the MAC layer cancels the deactivation request; and the MAC layer has already deactivated the pre-configuration information.

9. The method according to claim 7 or 8, wherein
that the UE has already sent the activation request comprises: after performing packet assembly of the activation request, determining, by the UE, that the UE has already sent the activation request; and/or
that the UE has already sent the deactivation request comprises: after performing packet assembly of the deactivation request, determining, by the UE, that the UE has already sent the deactivation request.

10. The method according to any one of claims 1 to 4, wherein the stopping, by the UE when a preset condition is met, requesting an uplink resource comprises:
canceling, by the UE when the preset condition is met, the RACH triggered by the SR, wherein the RACH is used to request the uplink resource; and
when the first information is the activation request, the preset condition comprises one or more of the following: the activation request is canceled; the SR triggered by the activation request is canceled; measurement is to be stopped, wherein the measurement comprises at least one or more of positioning measurement and RRM measurement; second information is received, wherein the second information is used to modify the pre-configuration information; the pre-configuration information has already been activated; and new pre-configuration information is received; and/or
when the first information is the deactivation request, the preset condition comprises one or more of the following: second information is received, wherein the second information is used to modify the pre-configuration information; the deactivation request is canceled; the SR triggered by the deactivation request is canceled; and the pre-configuration information has already been deactivated.

11. The method according to claim 10, wherein the UE comprises an RRC layer and a MAC layer; and
when the first information is the activation request, the preset condition comprises one or more of the following: the MAC layer cancels the activation request; the MAC layer cancels the SR triggered by the activation request; the RRC layer indicates the MAC layer to stop measurement; the RRC layer receives the second information and sends a cancellation indication to the MAC layer, wherein the cancellation indication is used to cancel the activation request; the MAC layer has already activated the pre-configuration information; and the RRC layer receives new pre-configuration information, and sends the new pre-configuration information to the MAC layer; and/or
when the first information is the deactivation request, the preset condition comprises one or more of the following: the RRC layer receives the second information, and the RRC layer sends a cancellation indication to the MAC layer, wherein the cancellation indication is used to cancel the deactivation request; the MAC layer cancels the deactivation request; the MAC layer cancels the SR triggered by the deactivation request; and the MAC layer has already deactivated the pre-configuration information.

12. The method according to any one of claims 1 to 11, wherein the first information is a medium access control control element MAC CE.

13. A communication apparatus, comprising:
a transceiver module, configured to receive pre-configuration information; and
a processing module, configured to: when a preset condition is met, stop requesting an uplink resource, wherein
the uplink resource is used to send first information, and when the first information is an activation request, the first information is used to activate the pre-configuration information; or when the first information is a deactivation request, the first information is used to deactivate the pre-configuration information.

14. The apparatus according to claim 13, wherein the pre-configuration information is configuration information of a pre-configured measurement gap MG for positioning.

15. The apparatus according to claim 13 or 14, wherein when a physical uplink shared channel PUSCH resource used to send the first information does not exist, the processing module is further configured to:
trigger a scheduling request SR, wherein the SR is used to request the PUSCH resource.

16. The apparatus according to claim 15, wherein when a physical uplink control channel PUCCH resource used to send the SR does not exist, the processing module is further configured to:
trigger a random access channel RACH, wherein the RACH is used to request the uplink resource.

17. The apparatus according to any one of claims 13 to 16, wherein when the apparatus meets the preset condition, the processing module is specifically configured to:
when the apparatus meets the preset condition, cancel the first information, and stop requesting the uplink resource, wherein
when the first information is the activation request, the preset condition comprises one or more of the following: measurement is to be stopped; new pre-configuration information is received; other pre-configuration information is activated, wherein the other pre-configuration information meets a measurement requirement; second information is received, wherein the second information is used to modify the pre-configuration information; and the pre-configuration information has already been activated, wherein the measurement comprises at least one or more of positioning measurement and radio resource management RRM measurement; and/or when the first information is the deactivation request, the preset condition comprises one or more of the following: second information is received, wherein the second information is used to modify the pre-configuration information; and the pre-configuration information has already been deactivated.

18. The apparatus according to claim 17, wherein UE comprises a radio resource control RRC layer and a medium access control MAC layer; and
when the first information is the activation request, the preset condition comprises one or more of the following: the RRC layer indicates the MAC layer to stop measurement; the RRC layer receives new pre-configuration information, and sends the new pre-configuration information to the MAC layer; the MAC layer activates other pre-configuration information; the RRC layer receives the second information, and the RRC layer sends a cancellation indication to the MAC layer, wherein the cancellation indication is used to cancel the activation request; and the MAC layer has already activated the pre-configuration information; and/or
when the first information is the deactivation request, the preset condition comprises one or more of the following: the RRC layer receives the second information, and the RRC layer sends a cancellation indication to the MAC layer, wherein the cancellation indication is used to cancel the deactivation request; and the MAC layer has already deactivated the pre-configuration information.

19. The apparatus according to any one of claims 13 to 16, wherein when the apparatus meets the preset condition, the processing module is specifically configured to:
cancel, when the apparatus meets the preset condition, the SR triggered by the first information, wherein the SR is used to request the PUSCH resource, and the PUSCH resource is used to send the first information; and
when the first information is the activation request, the preset condition comprises one or more of the following: the activation request has already been sent; the activation request is canceled; measurement is to be stopped, wherein the measurement comprises at least one or more of positioning measurement and RRM measurement; second information is received, wherein the second information is used to modify the pre-configuration information; the pre-configuration information has already been activated; and new pre-configuration information is received; and/or
when the first information is the deactivation request, the preset condition comprises one or more of the following: the deactivation request has already been sent; second information is received, wherein the second information is used to modify the pre-configuration information; the deactivation request is canceled; and the pre-configuration information has already been deactivated.

20. The apparatus according to claim 19, wherein UE comprises an RRC layer and a MAC layer; and
when the first information is the activation request, the preset condition comprises one or more of the following: the MAC layer has already sent the activation request; the MAC layer cancels the activation request; the RRC layer indicates the MAC layer to stop measurement; the RRC layer receives the second information, and the RRC layer sends a cancellation indication to the MAC layer, wherein the cancellation indication is used to cancel the activation request; the MAC layer has already activated the pre-configuration information; and the RRC layer receives new pre-configuration information, and sends the new pre-configuration information to the MAC layer; and/or
when the first information is the deactivation request, the preset condition comprises one or more of the following: the MAC layer has already sent the deactivation request; the RRC layer receives the second information, and the RRC layer sends a cancellation indication to the MAC layer, wherein the cancellation indication is used to cancel the deactivation request; the MAC layer cancels the deactivation request; and the MAC layer has already deactivated the pre-configuration information.

21. The apparatus according to claim 19 or 20, wherein
that the activation request has already been sent comprises: after packet assembly of the activation request is performed, determining that the activation request has already been sent; and/or
that the deactivation request has already been sent comprises: after packet assembly of the deactivation request is performed, determining that the UE has already sent the deactivation request.

22. The apparatus according to any one of claims 13 to 16, wherein when the apparatus meets the preset condition, the processing module is specifically configured to:
cancel, when the apparatus meets the preset condition, the RACH triggered by the SR, wherein the RACH is used to request the uplink resource; and
when the first information is the activation request, the preset condition comprises one or more of the following: the activation request is canceled; the SR triggered by the activation request is canceled; measurement is to be stopped, wherein the measurement comprises at least one or more of positioning measurement and RRM measurement; second information is received, wherein the second information is used to modify the pre-configuration information; the pre-configuration information has already been activated; and new pre-configuration information is received; and/or
when the first information is the deactivation request, the preset condition comprises one or more of the following: second information is received, wherein the second information is used to modify the pre-configuration information; the deactivation request is canceled; the SR triggered by the deactivation request is canceled; and the pre-configuration information has already been deactivated.

23. The apparatus according to claim 22, wherein UE comprises an RRC layer and a MAC layer; and
when the first information is the activation request, the preset condition comprises one or more of the following: the MAC layer cancels the activation request; the MAC layer cancels the SR triggered by the activation request; the RRC layer indicates the MAC layer to stop measurement; the RRC layer receives the second information and sends a cancellation indication to the MAC layer, wherein the cancellation indication is used to cancel the activation request; the MAC layer has already activated the pre-configuration information; and the RRC layer receives new pre-configuration information, and sends the new pre-configuration information to the MAC layer; and/or
when the first information is the deactivation request, the preset condition comprises one or more of the following: the RRC layer receives the second information, and the RRC layer sends a cancellation indication to the MAC layer, wherein the cancellation indication is used to cancel the deactivation request; the MAC layer cancels the deactivation request; the MAC layer cancels the SR triggered by the deactivation request; and the MAC layer has already deactivated the pre-configuration information.

24. The apparatus according to any one of claims 13 to 23, wherein the first information is a medium access control control element MAC CE.

25. A communication apparatus, comprising a processor, wherein the processor is connected to a memory, the memory is configured to store a computer program, and the processor is configured to execute the computer program stored in the memory, to enable the communication apparatus to perform the method according to any one of claims 1 to 12.

26. A computer-readable storage medium, wherein the computer-readable storage medium stores a computer program or instructions, and when the computer program or the instructions are executed by a communication apparatus, the method according to any one of claims 1 to 12 is implemented.

27. A computer program product, wherein the computer program product comprises a computer program or instructions, and when the computer program or the instructions are executed by a communication apparatus, the method according to any one of claims 1 to 12 is implemented.
